# EUROPEAN PATENT APPLICATION

(11) **EP 4 791 060 A1**
(43) Date of publication of application: **12.08.2026**
(21) Application number: 23954834.0
(22) Date of filing: 06.10.2023
(51) Int. Cl.: H04W 16/28, H04W 16/32, H04W 28/16, H04W 72/1268

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); WANG, Jing, Beijing 100190 (CN); SUN, Weiqi, Beijing 100190 (CN)
(74) Representative: Hoffmann Eitle
(86) International application number: PCT/JP2023/036584
(87) International publication number: WO 2025/074627

(57) **Abstract**

A terminal according to one aspect of the present disclosure includes: a receiving section that receives configuration information including at least one of a joint Transmission Configuration Indication (TCI) state and a separate TCI state; and a control section that controls reception of a downlink (DL) signal from a macro transmission/reception point (TRP) and transmission of an uplink (UL) signal to a UL reception point, based on the configuration information. According to one aspect of the present disclosure, it is possible to appropriately perform transmission of a UL signal to a UL reception point.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is studied to provide a UL reception point that mainly performs UL reception in addition to typical transmission/reception points (macro TRPs), to enhance UL coverage. For example, a Heterogeneous Network (HetNet) using a macro Base Station (BS) (DL transmission point) and a micro BS (UL reception point) and the like are also under study.

However, the configuration of a TCI state of a case where the UL reception point is applied is not clear. This may cause a problem such as a decrease in communication throughput at the time of transmitting a UL signal to the UL reception point.

Thus, an object of the present disclosure is to provide a terminal, a radio communication method, and a base station that can appropriately perform transmission of a UL signal to a UL reception point.

### Solution to Problem

A terminal according to one aspect of the present disclosure includes: a receiving section that receives configuration information including at least one of a joint Transmission Configuration Indication (TCI) state and a separate TCI state; and a control section that controls reception of a downlink (DL) signal from a macro transmission/reception point (TRP) and transmission of an uplink (UL) signal to a UL reception point, based on the configuration information.

### Advantageous Effects of Invention

According to one aspect of the present disclosure, it is possible to appropriately perform transmission of a UL signal to a UL reception point.

### Brief Description of Drawings

[FIG. 1] FIG. 1A is a diagram to show an example of typical deployment of a transmission/reception point. FIG. 1B is a diagram to show an example of UL dense deployment.
[FIG. 2] FIG. 2 is a diagram to show an example of DL/UL coverage of a Heterogeneous Network (HetNet).
[FIG. 3] FIG. 3A is a diagram to show an example of association between RS indices and PL values. FIG. 3B is a diagram to show an example of association of RS indices and delta PL values.
[FIG. 4] FIG. 4 is a diagram to show an example of option 1 in UL dense deployment.
[FIG. 5] FIG. 5 is a diagram to show an example of option 2 in UL dense deployment.
[FIG. 6] FIG. 6 is a diagram to show an example of power control parameters for TCI state.
[FIG. 7] FIG. 7 is a diagram to show an example of a TCI state information element (TCI-State information element) of Rel. 17.
[Fig. 8] FIG. 8A and FIG. 8B show an example of a unified/common TCI framework.
[FIG. 9] FIG. 9A and FIG. 9B are diagrams to show examples of UL power control parameters in Rel. 17.
[FIG. 10] FIG. 10A is a diagram to show an example of UE movement in Rel. 17. FIG. 10B is a diagram to show an example of UE movement in Rel. 18.
[Fig. 11] FIG. 11 is a diagram to show a first example of power control parameters (for example, RRC parameters) for TCI state according to a zeroth embodiment.
[FIG. 12] FIG. 12 is a diagram to show a second example of the power control parameters (for example, RRC parameters) for TCI state according to the zeroth embodiment.
[FIG. 13] FIG. 13 is a diagram to show a third example of the power control parameters (for example, RRC parameters) for TCI state according to the zeroth embodiment.
[FIG. 14] FIG. 14 is a diagram to show a configuration example of a unified TCI state for multi-TRP using scenario 1 in a first embodiment.
[FIG. 15] FIG. 15 is a diagram to show a configuration example of a TCI state for multi-TRP using scenario 2 in the first embodiment.
[FIG. 16] FIG. 16 is a diagram to show a configuration example of a unified TCI state for multi-TRP using scenario 1 in a second embodiment.
[FIG. 17] FIG. 17 is a diagram to show a configuration example of a TCI state for multi-TRP using scenario 2 in the second embodiment.
[FIG. 18] FIG. 18 is a diagram to show a configuration example of a unified TCI state for multi-TRP using scenario 1 in a third embodiment.
[FIG. 19] FIG. 19 is a diagram to show a configuration example of a TCI state for multi-TRP using scenario 2 in the third embodiment.
[FIG. 20] FIG. 20 is a diagram to show an example of a schematic structure of a radio communication system according to one embodiment.
[FIG. 21] FIG. 21 is a diagram to show an example of a structure of a base station according to one embodiment.
[FIG. 22] FIG. 22 is a diagram to show an example of a structure of a user terminal according to one embodiment.
[FIG. 23] FIG. 23 is a diagram to show an example of a hardware structure of the base station and the user terminal according to one embodiment.
[FIG. 24] FIG. 24 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Scenario 1: UL Dense Deployment (UL-only TRP))

In Rel-15 NR, coverages (reachable distances) of a PUSCH, PUCCH, PRACH, PDSCH, PDCCH, and PBCH are not equal to each other. The PUSCH coverage is restricted, especially at a high frequency. For future radio communication systems (for example, Rel. 18, Rel. 19, or later versions), improvement in at least one of UL coverage and UL throughput is under study.

It is studied that, to enhance UL coverage, a UL reception point is provided in addition to typical transmission/reception points. Thus, an example of typical deployment of a transmission/reception point and an example of deployment provided with a UL reception point (UL dense deployment) will be described.

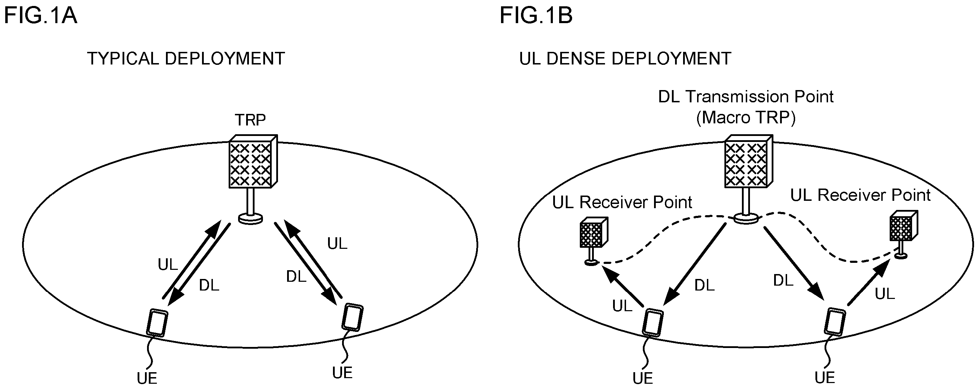

FIG. 1A is a diagram to show an example of typical deployment of a transmission/reception point. In FIG. 1A, each UE receives a DL signal from the transmission/reception point (TRP) and transmits a UL signal to the TRP. For example, the UE and the TRP being far from each other leads to large pathloss, which may degrade communication quality.

FIG. 1B is a diagram to show an example of UL dense deployment. It is studied that, to enhance UL coverage, such a UL reception point as that shown in FIG. 1B is provided in addition to such a DL transmission point as that shown in FIG. 1A. In FIG. 1B, each UE receives a DL signal from a DL transmission point (TRP/central TRP/DL TRP/macro TRP) supporting macro cell and transmits a UL signal to a corresponding UL reception point (for example, a reception point with lower pathloss/received power). Note, however, that the UE can also perform UL transmission to the DL transmission point.

Using such UL dense deployment as that shown in FIG. 1B reduces pathloss, provides UL signaling quality, and obtains a higher coding rate, as compared to such typical deployment as that shown in FIG. 1A, thereby enabling both coverage and a UL data rate to be improved. The UL reception point primarily performs reception, and thus has a reduced number of required functions (such as a power amplifier, for example) and low cost as compared to a transmission/reception point corresponding to a typical small cell, leading to extremely simple deployment management.

### (Scenario 2: Decoupling of DL TRP and UL TRP in HetNet)

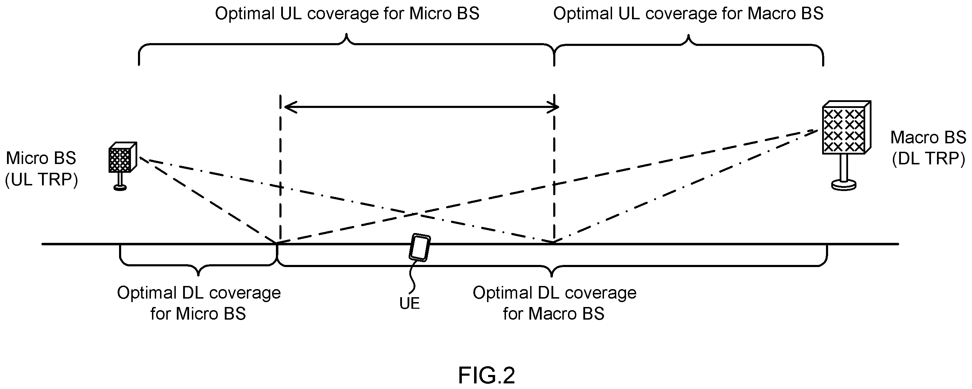

In the present disclosure, a Heterogeneous Network (HetNet) using a macro Base Station (BS) (DL TRP) and a micro BS (UL TRP) may be applied (FIG. 2). In the normal HetNet, transmission power of the macro BS is different from that of the micro BS. The optimal DL coverage and the optimal UL coverage are different. For example, the DL coverage is determined by RSRP, and the UL coverage is determined by pathloss (PL).

In an example of FIG. 2, the UE is included in the optimal DL coverage of the macro BS and the optimal UL coverage of the micro BS. In this case, the UE can receive DL from the macro BS and transmit UL to the micro BS. Note, however, that the UE may transmit some reference signals/channels (for example, an SRS for Antenna switching (AS) usage used to acquire DL CSI) to the macro BS. Accordingly, there is a possibility that the UE requires two TAs in this scenario. Note that the SRS for AS is a signal for a base station (macro BS) to perform DL CSI measurement (for example, determination of a DL MIMO precoder) by using channel reciprocity, based on SRS reception, and thus is transmitted to the macro BS. On the other hand, an SRS for Codebook/Non-codebook usage is used for determination of a precoder/beam for the PUSCH, and thus is transmitted to the micro BS.

In the HetNet, even if the micro BS has a DL transmission capability, the energy of the micro BS can be saved by turning off DL almost all the time. In this case, the function of the micro BS is similar to that of a UL-only TRP (UL reception point).

### (Reception of Pathloss (PL))

The UE may receive, via DL signaling, first information indicating pathloss (PL) estimated and notified (transmitted) by a network and used for transmission power control (TPC). The DL signaling may be at least one of higher layer signaling (for example, RRC or a MAC CE) and physical layer signaling (for example, downlink control information (DCI)).

The UE may calculate UL signal transmission power (for example, the transmission power of a PUSCH (P_{PUSCH,b,f,c}(i, j, q_{d}, l)) in equation (1), the transmission power of a PUCCH (P_{PUCCH,b,f,c}(i, qᵤ, q_{d}, l)) in equation (2), the transmission power of an SRS (P_{SRS,b,f,c}(i, qₛ, l)) in equation (3), and the transmission power of a PRACH (P_{PRACH,b,f,c}(i)) in equation (4)) for a reception point that does not transmit downlink data, by using received pathloss (PL_{b,f,c}(q_{d}), PL_{b,f,c}).
{Option 1} A network may notify the UE of an absolute pathloss (PL) value [dB] for each RS index (transmit the absolute pathloss value to the UE). The UE may directly use the notified absolute pathloss value for calculation of the transmission power.
{Option 2} The network may notify the UE of a relative pathloss (delta PL) value [dB] for each RS index (transmit the relative pathloss value to the UE). The UE may use a pathloss value obtained by applying (adding or subtracting) the received delta PL value to a pathloss value estimated from a DL RS transmitted from a macro cell (central TRP) in an existing manner, for calculation of the transmission power.

Notification/configuration of the PL value/delta PL value in options 1 and 2 may be performed for each index of q_{d}/SSB/CSI-RS/SRS resource/SRS resource set. Notification of one or a plurality of RS indices and the PL value/delta PL value corresponding to each RS index may be performed by DL signaling. The PL value/delta PL value may be interpreted as a PL parameter/delta PL parameter.

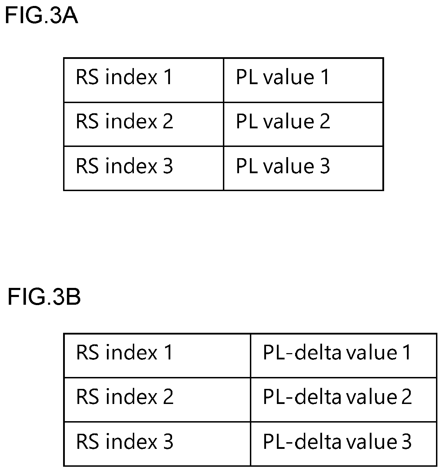

FIG. 3A is a diagram to show an example of association between RS indices and PL values. FIG. 3B is a diagram to show an example of association of RS indices and delta PL values. The association (correspondence) between the RS indices and the PL values/delta PL values is not limited to FIG. 3A and FIG. 3B. For example, one RS index may correspond to a plurality of PL values/delta PL values. Note that the quantization table (range and step) of the PL values/delta PL values may be defined in advance in a specification. A PL value/delta PL value to be notified may be a quantized value or the index of the quantized value.

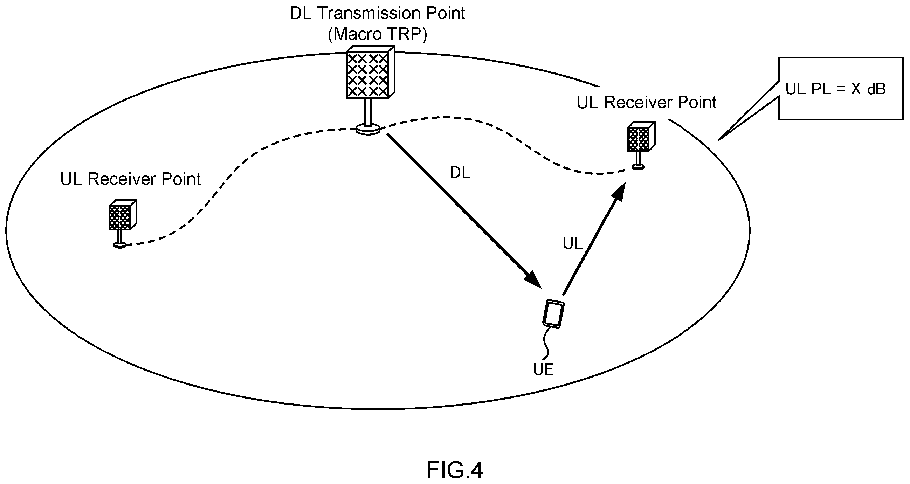

FIG. 4 is a diagram to show an example of option 1 in UL dense deployment. A UL reception point receives/measures a UL signal. When a DL transmission point (macro TRP/gNB) knows this transmission power of the UL signal, the DL transmission point can know the accurate PL value of the UL reception point. In this case, the DL transmission point can notify the UE of the absolute PL value (X [dB]) of the UL reception point.

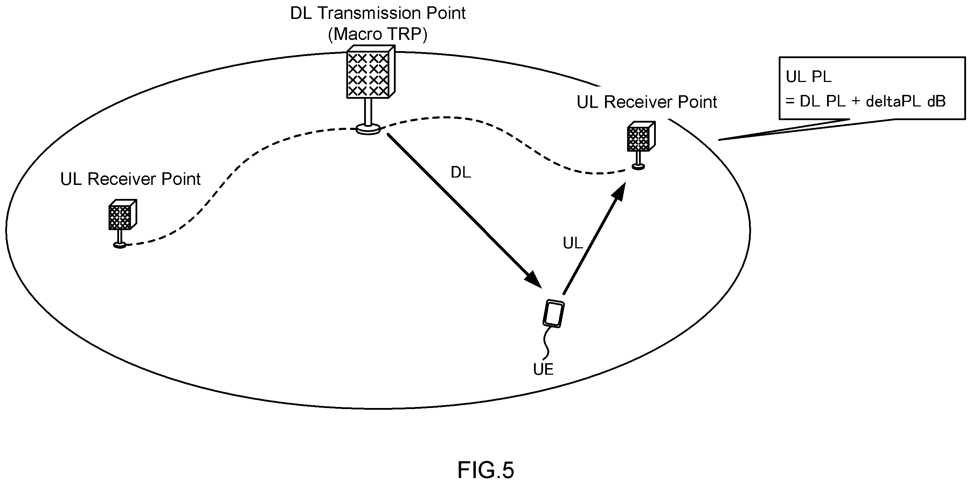

FIG. 5 is a diagram to show an example of option 2 in UL dense deployment. When both a DL transmission point (macro TRP/gNB) and a UL reception point measure the same resource, the DL transmission point can recognize the difference between the PL between the DL transmission point and a UE and the PL between the UL reception point and the UE. In this case, the DL transmission point may notify the UE of the difference (relative PL/delta PL). The relative PL/delta PL may be referred to as a PL offset.

As described above, even when the UE is not notified of a DL RS (RS index) used for pathloss estimation, the UE can calculate transmission power by using the notified PL value/delta PL value.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (UL Power Control Parameter for TCI State)

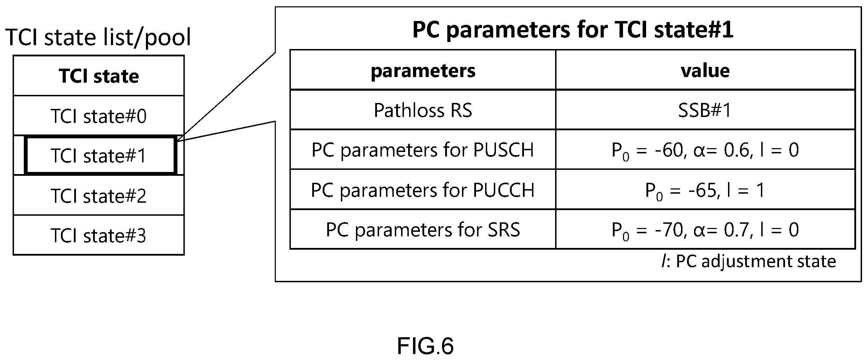

FIG. 6 is a diagram to show an example of power control parameters for TCI state. As shown in FIG. 6, a pathloss RS and the power control parameters for PUSCH/PUCCH/SRS are associated with the TCI state.

When a TCI state of Rel. 17 is configured, a TCI state and spatial relation information (except positioning) of Rel. 15/16 cannot be configured in the same band. For a channel/RS to which an indicated TCI state is not applied, a TCI state of Rel. 17 may be configured instead of a TCI state and spatial relation information of Rel. 15/16.

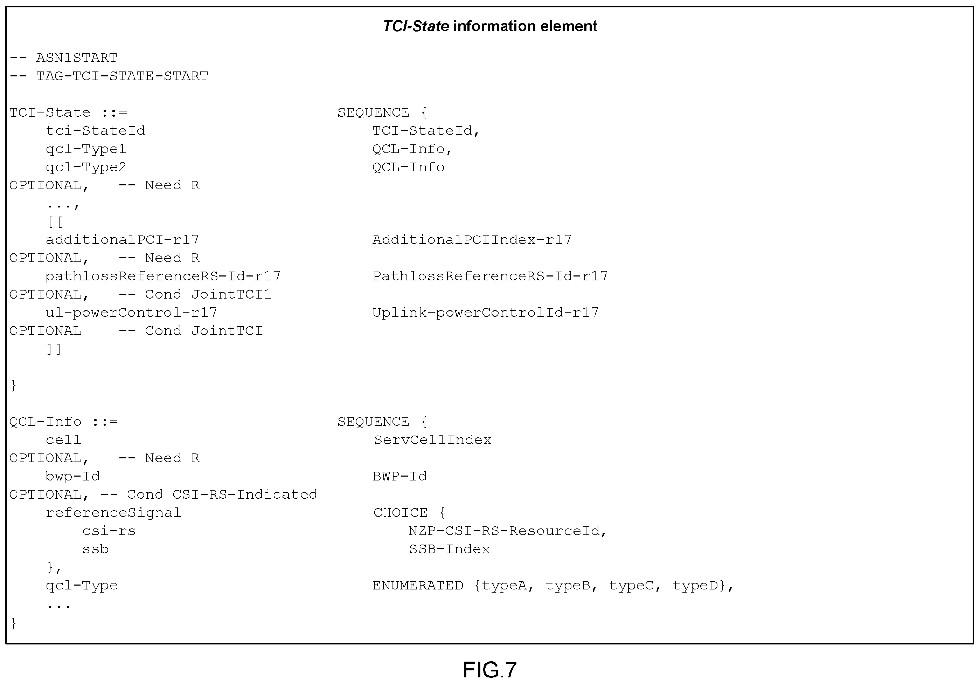

A UE may transmit UE capability information indicating that different power control parameters are associated with each TCI state. When the UE does not support this UE capability, a default power control parameter may be used. FIG. 7 is a diagram to show an example of a TCI-State information element of Rel. 17. A default power control parameter is, for example, the pathloss reference RS-ID (pathlossReferenceRS-Id-r17) in FIG. 7.

### (Unified/Common TCI Framework)

According to the unified TCI framework, a plurality of types (UL/DL) of channels/RSs can be controlled by a common framework. The unified TCI framework may indicate a common beam (common TCI state) and apply the common beam to all UL and DL channels, or may apply a common beam for UL to all UL channels while applying a common beam for DL to all DL channels, instead of defining a TCI state or a spatial relation for each channel as in Rel. 15.

One common beam for both DL and UL or a common beam for DL and a common beam for UL (two common beams in total) are under study.

The UE may assume the same TCI state (joint TCI state, joint TCI pool, joint common TCI pool, joint TCI state set) for UL and DL. The UE may assume different TCI states (separate TCI state, separate TCI pool, UL separate TCI pool and DL separate TCI pool, separate common TCI pool, UL common TCI pool and a DL common TCI pool) for each of UL and DL.

Default beams of UL and DL may be brought to match by beam management based on a MAC CE (MAC CE-level beam indication). A default TCI state for PDSCH may be updated to match a default UL beam (spatial relation).

A common beam/unified TCI state may be indicated from the same TCI pool (joint common TCI pool, joint TCI pool, set) for both UL and DL by DCI-based beam management (DCI-level beam indication). X (> 1) TCI states may be activated by the MAC CE. UL/DL DCI may select one from X active TCI states. The selected TCI state may be applied to both UL and DL channels/RSs.

The TCI pool (set) may be a plurality of TCI states configured by an RRC parameter, or may be a plurality of TCI states (active TCI states, active TCI pool, set) activated by a MAC CE among a plurality of TCI states configured by an RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to a UL channel/RS and the number M (≥ 1) of TCI states (DL TCI states) applied to a DL channel/RS may be defined. Notification/configuration/indication of at least one of N and M may be made to a UE by higher layer signaling or physical layer signaling.

In the present disclosure, when it is described as N = M = X (where X is any integer), this may mean that X TCI states (corresponding to X TRPs) common to UL and DL (joint TCI states) may be notified/configured/indicated to a UE. When N = X (X is any integer) and M = Y (Y is any integer, and Y = X may hold) are described, this may mean that X UL TCI states (corresponding to X TRPs) and Y DL TCI states (corresponding to Y TRPs) (i.e., separate TCI states) may be notified/configured/indicated to the UE.

For example, when it is described as N = M = 1, this may mean that one TCI state common to DL and UL for a single TRP is notified/configured/indicated to a UE (joint TCI state for a single TRP).

For example, when it is described as N = 1 and M = 1, this may mean that one UL TCI state and one DL TCI state for a single TRP are separately notified/configured/indicated to a UE (separate TCI states for a single TRP).

For example, when it is described as N = M = 2, this may mean that a plurality of (two) TCI states common to UL and DL for a plurality of (two) TRPs are notified/configured/indicated to a UE (joint TCI states for a plurality of TRPs).

For example, when it is described as N = 2 and M = 2, this may mean that a plurality of (two) UL TCI states and a plurality of (two) DL TCI states for a plurality of (two) TRPs are notified/configured/indicated to a UE (separate TCI states for a plurality of TRPs).

Note that, in the above examples, cases where the values of N and M are each one or two have been described, but the values of N and M may each be three or more, and N and M may be different from each other.

It is studied that N = M = 1 is supported in Rel. 17. It is studied that other cases are supported in Rel. 18 and later versions.

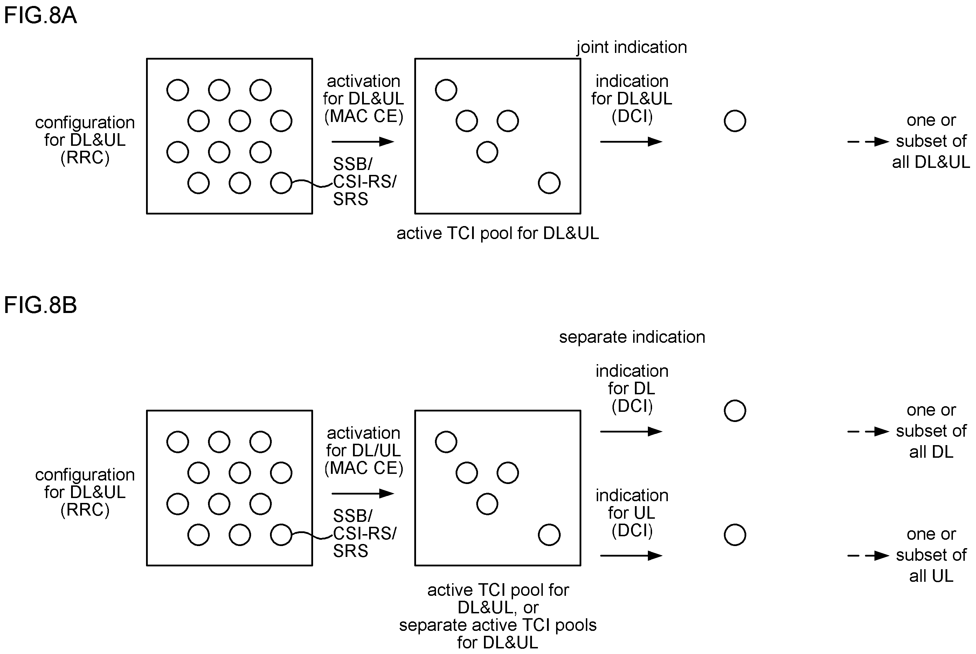

In the example in FIG. 8A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 8A, one dot may represent one TCI state applied to both UL and DL or may represent two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 8B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR or later versions, it is assumed that activation/indication of beams to TCI states associated with different physical cell identifiers (PCIs) by a MAC CE/DCI is supported. In Rel-18 NR or later versions, it is assumed that indication of change of a serving cell to a cell having a different PCI by a MAC CE/DCI is supported.

### (UL Power Control Parameter of Unified TCI State in Rel. 17)

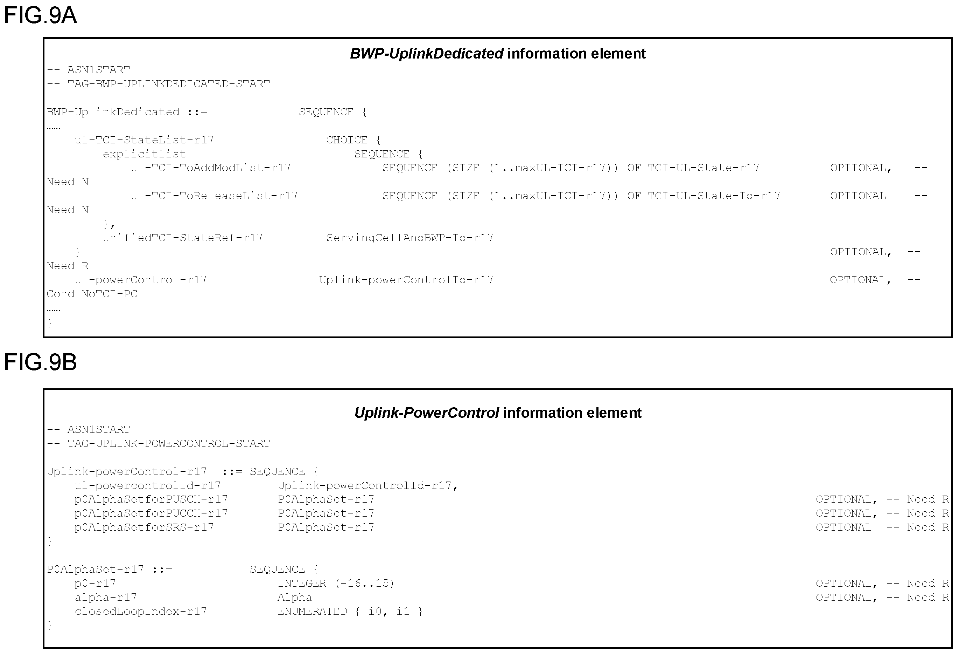

In a unified TCI state in Rel. 17, a UE is provided with a UL power control parameter (RRC information element "uplink-powerControl-r17") included in a UE-specific UL BWP configuration (RRC information element "BWP-UplinkDedicated") (see FIG. 9A). When UL power control (ul-powerControl) for the UL TCI state/joint TCI state of a serving cell is not configured for the UE, the parameter is used for transmission power control of UL transmission.

The UL power control parameter (RRC information element "uplink-powerControl-r17") includes a UL power control parameter ID (Uplink-powerControlId-r17), and the UL power control parameter is identified by the ID.

The UL power control parameter (RRC information element "uplink-powerControl-r17") includes at least one of a set of P0 and α for PUSCH (p0AlphaSetforPUSCH-r17), a set of P0 and α for PUCCH (p0AlphaSetforPUCCH-r17), and a set of P0 and α for SRS (p0AlphaSetforSRS-r17), which are used for transmission power control of each channel/signal (see FIG. 9B).

In Rel-17 unified TCI framework, RRC/MAC CE/DCI indicates one joint TCI or one set of {DL TCI, UL TCI} (separate TCI). The indicated TCI is applied to a plurality of UL/DL channels/RSs.

### (Unified TCI State for Multi-TRP in Rel. 18)

In Rel. 18, a specification of unified TCI for multi-TRP is enhanced. For example, in a case of single-DCI based multi-TRP, a UE may be indicated with up to two joint TCIs or up to two sets of {DL TCI, UL TCI} by RRC/MAC CE/DCI. In a case of multi-DCI based multi-TRP, a UE may be indicated with one joint TCI or one set of {DL TCI, UL TCI} for each coresetPoolIndex by RRC/MAC CE/DCI. The indicated TCI is applied to a plurality of UL/DL channels/RSs. The association of the first and second indicated TCIs with UL/DL channels/RSs may be defined in advance in a specification, may be configured by RRC signaling, or may be indicated by DCI.

### (L1/L2 Inter-cell Mobility)

As described above, it is studied that a UE performs UL transmission to one or a plurality of cells/TRPs. As a procedure of this case, scenario A or scenario B below is conceivable. Note that, in the present disclosure, a serving cell may be interpreted as a TRP in a serving cell. Layer1/layer2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI." A non-serving cell, a cell having a different PCI, and an additional cell may be interchangeably interpreted.

### <Scenario A>

Scenario A corresponds to, for example, inter-cell mobility of multi-TRP, but may be a scenario that does not correspond to inter-cell mobility of multi-TRP.
(1) The UE receives, from a serving cell, a configuration of an SSB for beam measurement of a TRP corresponding to a PCI different from that of the serving cell and a configuration necessary for using a radio resource for data transmission/reception with a resource of the different PCI.
(2) The UE performs beam measurement on a TRP corresponding to the different PCI and reports a beam measurement result to the serving cell.
(3) Based on the above report, a transmission configuration indication (TCI) state associated with the TRP corresponding to the different PCI is activated by L1/L2 signaling from the serving cell.
(4) The UE performs transmission/reception by using a UE-dedicated channel on the TRP corresponding to the different PCI.
(5) The UE needs to always cover the serving cell also in a case of multi-TRP. The UE needs to use a common channel (broadcast control channel (BCCH), a paging channel (PCH)) and the like from the serving cell, as in a known system.

In scenario A, when the UE transmits/receives a signal to/from an additional cell/TRP (TRP corresponding to the PCI of the additional cell), the serving cell (assumption of the serving cell in the UE) is not changed. The UE is configured with higher layer parameters related to the PCI of the non-serving cell by the serving cell. Scenario A may be applied in Rel. 17, for example.

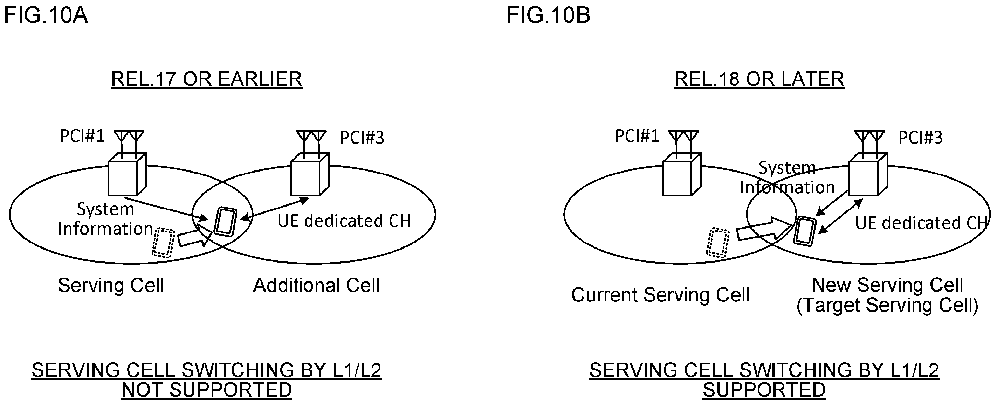

FIG. 10A is a diagram to show an example of UE movement in Rel. 17. A case is assumed where a UE moves from the cell (serving cell) of PCI #1 to the cell (additional cell) of PCI #3 overlapping the serving cell. In this case, in Rel. 17, switching of a serving cell by L1/L2 is not supported.

The additional cell is a cell having an additional PCI different from the PCI of the serving cell. The UE can receive/transmit a UE-dedicated channel from the additional cell. The UE needs to be within the coverage of the serving cell to receive a UE-common channel (for example, system information/paging/short message). When the UE moves out of the coverage of the serving cell, it is necessary to switch the cell by handover (also referred to as L3 mobility) or the like.

### <Scenario B>

In scenario B, L1/L2 inter-cell mobility is applied. In L1/L2 inter-cell mobility, serving cell change is possible by using a function such as beam control without RRC reconfiguration. In other words, transmission/reception to/from an additional cell is possible without handover. Since a data incommunicable period occurs due to the necessity of RRC reconnection and the like for handover, application of L1/L2 inter-cell mobility with no necessity of handover enables data communication to continue even at the time of serving cell change. Scenario B may be applied in Rel. 18, for example. In scenario B, for example, the following procedure is performed.
(1) A UE receives, from a serving cell, the configuration of an SSB of a cell (additional cell) having a different PCI for beam measurement/serving cell change.
(2) The UE performs beam measurement on a cell using the different PCI and reports a beam measurement result to the serving cell.
(3) The UE may receive the configuration of the cell having a different PCI (serving cell configuration) by higher layer signaling (for example, RRC). In other words, configuration related to serving cell change may be performed in advance. This configuration may be performed together with the configuration in (1) or may be performed separately.
(4) Based on the above report, the TCI state of the cell having the different PCI may be activated by L1/L2 signaling according to the serving cell change. The TCI state activation and the serving cell change may be performed separately.
(5) The UE changes the serving cell (assumption of the serving cell) and initiates reception/transmission by using a UE-specific channel and a TCI state configured in advance.

In other words, in scenario B, the serving cell (assumption of the serving cell in the UE) is updated by L1/L2 signaling. Scenario B may be applied in Rel. 18.

FIG. 10B is a diagram to show an example of UE movement in Rel. 18. In Rel. 18, a serving cell is switched by L1/L2 (for example, DCI/MAC CE). A UE can receive/transmit a UE-dedicated channel/common channel from/to a new serving cell (or a target serving cell). The UE may move out of the coverage of the current serving cell (for example, Current serving cell).

### (Analysis)

As described above, it is studied to provide a UL reception point that mainly performs UL reception in addition to typical transmission/reception points (macro TRPs), to enhance UL coverage. For example, a Heterogeneous Network (HetNet) using a macro Base Station (BS) (DL transmission point) and a micro BS (UL reception point) and the like are also under study.

For a UL reception point, it is conceivable to use at least one of the Rel. 17/18 TCI frameworks (joint/separate TCI states) above. However, the configuration of a TCI state of a case where the UL reception point is applied is not clear. This may cause a problem such as a decrease in communication throughput at the time of transmitting a UL signal to the UL reception point.

Thus, the inventors of the present invention came up with the idea of a method that enables transmission of a UL signal to a UL reception point to be performed appropriately.

### (Various Interpretations and so on)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a gNB, and a network (NW) may be interchangeably interpreted. In the present disclosure, a terminal, a user terminal, and a User Equipment (UE) may be interchangeably interpreted.

In the present disclosure, an indicated TCI state, a unified TCI state, a unified TCI state in which multi-TRP is not configured/used/applied, a unified TCI state defined in Rel. 17, a Rel-17 unified TCI state, and a first unified TCI state may be interchangeably interpreted.

In the present disclosure, an indicated TCI state, a unified TCI state, a unified TCI state in which multi-TRP is configured/used/applied, a unified TCI state in which multi-TRP can be configured/used/applied, an indicated TCI state in which multi-TRP is configured/used/applied, an indicated TCI state in which multi-TRP can be configured/used/applied, a unified TCI state defined in Rel. 18, a Rel-18 unified TCI state, a unified TCI state for multi-TRP, and a second unified TCI state may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

In the present disclosure, a cell, a PCI, a serving cell, a source serving cell, a source cell, a CC, a BWP in a CC, a BWP, and a band may be interchangeably interpreted. In the present disclosure, a cell, a PCI, a cell with an additional PCI, an additional cell, another cell, a non-serving cell, a cell having a different PCI, a candidate cell, a candidate serving cell, a cell having a PCI different from the PCI of the current serving cell, another serving cell, a target cell, a neighbor cell, and an inter-RAT neighbor cell may be interchangeably interpreted. A target cell may be a cell selected from among a plurality of candidate cells. In the present disclosure, switch, change, and update may be interchangeably interpreted. A serving cell may be interpreted as a serving cell before switch or a serving cell after switch.

A UL reception point may be connected to a TRP (for example, a base station or the like) or a core network via a wired connection or a wireless connection. The UL reception point may be treated as a network (NW) or a base station. The UL reception point may be capable of transmitting a downlink (DL) signal (for example, a PL value), and may be applied to a base station forming a macro cell. For example, the UL reception point may not transmit downlink data, and may transmit a control signal/channel.

In the present disclosure, a base station, a TRP, a UL reception point, a UL TRP, a UL only TRP, a micro BS, and a micro TRP may be interchangeably interpreted. The UL reception point may perform only UL reception, or may perform DL transmission when a condition is satisfied.

In the present disclosure, a base station, a TRP, a DL transmission point, a DL TRP, a DL only TRP, a macro BS, a macro TRP, and a central TRP may be interchangeably interpreted. The DL transmission point may perform only DL transmission, or may perform UL reception when a condition is satisfied.

In the present disclosure, UL dense deployment, a distributed TRP mode, a separated location mode of a transmission/reception point, a distributed transmission/reception mode, a separated TRP mode, TRP type 1, TRP type 2, TRP type A, and TRP type B may be interchangeably interpreted.

The present disclosure may presuppose multi-DCI based multi-TRP, single-DCI based multi-TRP, or at least one of scenario 1 and scenario 2 above.

In the present disclosure, being configured and receiving a configuration (configuration information) may be interchangeably interpreted.

In the present disclosure, TCI, a TCI state, a TCI state ID, a TCI state list/set/pool/group, and a TCI state list/set/pool/group ID may be interchangeably interpreted.

In the present disclosure, absolute PL, pathloss (PL), a PL value, and a PL parameter may be interchangeably interpreted. In the present disclosure, relative PL, delta PL, a PL offset, an offset of P_{O}, an offset of α, an offset of power/power density [x dBm], pathloss (PL), a PL value, and a PL parameter may be interchangeably interpreted. In the present disclosure, PL, a PL value, a PL RS, and a PL RSID may be interchangeably interpreted.

In the present disclosure, one set of TCI states (separate TCI states) may mean a set of a UL TCI state and a DL TCI state. A TCI state may mean a TCI state information element (TCI-State information element), which is an RRC information element.

### (Radio Communication Method)

### <Zeroth Embodiment>

A case where a UL power control parameter is configured (or not configured) for a UL TCI state or a joint TCI state of a serving cell will be described. Whether or not a PL value or a relative PL (delta PL) value is configured may be determined/configured for each TCI state ID. A PL value or a relative PL (delta PL) value may be determined/configured for each TCI state ID. A UL TCI state/joint TCI state may be simply referred to as a TCI state below.

In a unified TCI state of Rel. 17, an RRC parameter (Uplink-powerControlId-r17) indicating UL power control is configured for the UE for each TCI state or UL TCI state, to indicate TPC parameters (excluding a PL RS). The UE may be additionally configured with information indicating a PL value or a relative PL (delta PL) value as an option field of a TCI state (or a UL TCI state) or Uplink-powerControlId-r17.

When additional information indicating a PL value or a relative PL value is not configured for a TCI state or a UL TCI state (RRC parameter TCI-State or RRC parameter TCI-UL-State-r17), the UE may determine that the TCI state is associated with a macro TRP (DL transmission point).

When additional information indicating a PL value or a relative PL is configured for a TCI state or UL TCI state (parameter TCI-State or parameter TCI-UL-State-r17), the UE may determine that the TCI state is associated with a UL reception point.

A TCI state (RRC parameter TCI-State), a UL TCI state (RRC parameter TCI-UL-State-r17), and an RRC parameter indicating UL power control associated with a TCI state (Uplink-powerControlId-r17) may be interchangeably interpreted.

### {Option 0-1}

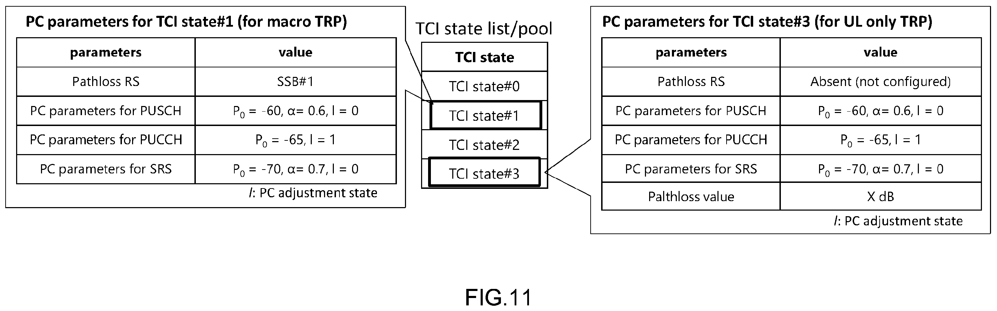

FIG. 11 is a diagram to show a first example of power control parameters (for example, RRC parameters) for TCI state according to a zeroth embodiment. As shown in FIG. 7, the configuration of a TCI state includes a parameter indicating a pathloss RS (pathlossReferenceRS-Id-r17) and a UL power control parameter (ul-powerControl-r17). As shown in FIG. 9B, ul-powerControl-r17 includes parameters indicating P₀ and α of a PUSCH, a PUCCH, and an SRS (p0AlphaSetforPUSCH-r17, p0AlphaSetforPUCCH-r17, and p0AlphaSetforSRS-r17). In the example shown in FIG. 11, the parameters for macro TRP (TCI state #1) includes only these known RRC parameters, but the parameters for UL reception point (TCI state #3) further includes a pathloss value (PL value).

In the example shown in FIG. 11, a pathloss RS is not configured, but a PL value is configured, for TCI state #3. Since the PL value is configured, a UE can determine UL transmission power by directly using the PL value, even when a pathloss RS is not configured.

A UE/base station may determine that the TCI state corresponds to a UL reception point, based on at least one of the fact that the parameters for TCI state includes no pathloss RS and the fact that the parameters for TCI state includes a PL value. The UE/base station may determine that the TCI state corresponds to a macro TRP, based on at least one of the fact that the parameters for TCI state includes a pathloss RS and the fact that the parameters for TCI state includes no PL value.

### {Option 0-2}

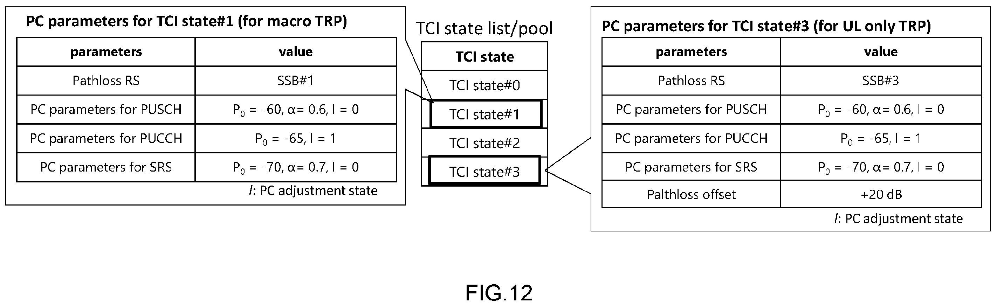

FIG. 12 is a diagram to show a second example of power control parameters (for example, RRC parameters) for TCI state according to the zeroth embodiment. The example shown in FIG. 12 is different from the example in FIG. 11 in that a pathloss RS is configured while a relative PL (PL offset) is configured instead of a PL value, for TCI state #3.

In the example of FIG. 12, a UE may use, for calculation of transmission power, a PL value obtained by applying (adding or subtracting) a received relative PL (PL offset) value to (from) a PL value estimated from a DL RS transmitted from a macro TRP.

A UE/base station may determine that the TCI state corresponds to a UL reception point, based on at least one of the fact that the parameters for TCI state includes a pathloss RS and the fact that the parameters for TCI state includes a relative PL (PL offset). The UE/base station may determine that the TCI state corresponds to a macro TRP, based on at least one of the fact that the parameters for TCI state includes no pathloss RS and the fact that the parameters for TCI state includes no relative PL (PL offset).

### {Option 0-3}

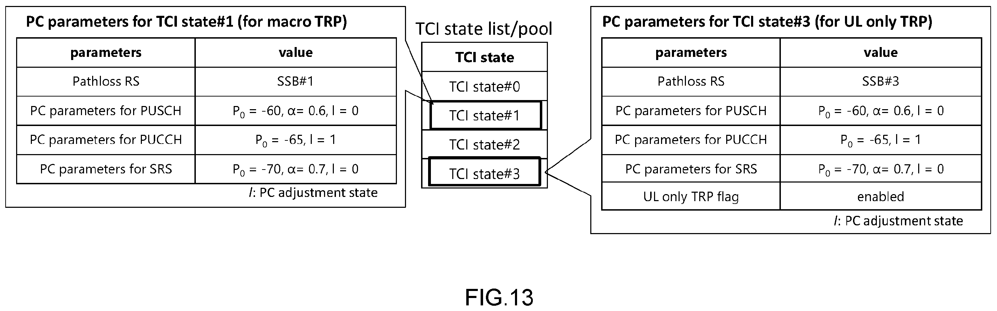

FIG. 13 is a diagram to show a third example of power control parameters (for example, RRC parameters) for TCI state according to the zeroth embodiment. In the example shown in FIG. 13, an explicit indication (UL only TRP flag) of a UL reception point (UL only TRP) is included as a parameter for UL reception point (TCI state #3).

The UE may determine that the TCI state corresponds to a UL reception point when the parameters for TCI state include an explicit indication of a UL reception point, and determine that the TCI state corresponds to a macro TRP when the parameters for TCI state include no explicit indication of a UL reception point.

The example in FIG. 13 may be combined with the examples of FIG. 11 and FIG. 12. For example, the explicit indication of a UL reception point (UL only TRP) may be added as a parameter for a UL reception point (TCI state #3) in FIG. 11 and FIG. 12.

### <<Variations>>

An explicit indication of macro TRP may be included as a parameter for a macro TRP (TCI state #1). A UE may determine that a TCI state corresponds to a macro TRP when the explicit indication of a macro TRP is included and determines that the TCI state corresponds to a UL reception point when no explicit indication of a macro TRP is included.

A different TCI state may be configured for a UL reception point or a macro TRP. The UE may switch between a UL reception point and a macro TRP by an RRC/MAC CE/DCI-based TCI state indication.

According to the zeroth embodiment, a UE can easily determine whether a TCI state corresponds to a UL reception point or a macro TRP.

### <First Embodiment>

The present embodiment may be based on the assumption that unified TCI for multi-TRP in Rel. 18 described above is used. In other words, a UE may receive configuration information indicating two TCI states (at least one of a maximum of two joint TCIs and a maximum of two sets of separate TCI states (DL TCI, UL TCI)). The UE may control reception of a DL signal from a macro TRP and transmission of a UL signal to a UL reception point, based on the configuration information.

Note that a configured TCI state ID (TCI-state ID, for joint/DL TCI) and a configured TCI state ID for UL (TCI-UL-State ID, for UL TCI) may be the same as or different from one set of indicated TCIs (specifically, a DL TCI ID and a UL TCI ID).

For example, different sets of TCI states may be associated with different TRPs. For example, one joint/UL TCI state for UL reception point and a joint/DL/UL TCI state for macro TRP may be different from each other. The UE may use one joint/DL TCI ID to receive a DL signal from the macro TRP (or transmit a UL signal to the macro TRP) and use another UL TCI ID to transmit a UL signal to a UL reception point.

One indicated TCI state may be used for UL reception point, and another indicated TCI state may be used for macro TRP.

The indicated TCI state may be applied to a plurality of UL/DL channels/RSs. The association of the first and second indicated TCIs with UL/DL channels/RSs may be defined in advance in a specification, may be configured by RRC signaling, or may be indicated by DCI.

The unified TCI (unified TCI of Rel. 18) may be applied only to a case of single-DCI based multi-TRP (or only to a case of multi-DCI based multi-TRP). The reason why a case of multi-DCI based multi-TRP is not considered is that, since a UL reception point does not receive DL, it is not preferable to associate different pieces of CORESETPoolindex with a plurality of CORESETs. In the unified TCI of Rel. 18 with multi-DCI, cross-TRP TCI indication is not supported. When the unified TCI of Rel. 18 with multi-DCI based multi-TRP is used, a UL reception point cannot transmit DCI with a TCI indication and hence cannot update "indicated TCI" associated with coresetPoolIndex of the UL reception point.

### {Option A}

The UE may receive configuration information including either a maximum of two joint TCI states or a maximum of two sets of separate TCI states (DL TCI, UL TCI) by higher layer signaling/physical layer signaling. The two respective joint TCI states or the maximum of two respective sets of separate TCI states may be associated with both a macro TRP and a UL reception point.

### <<Case where Joint TCI States are Configured for Macro TRP and UL Reception TRP>>

One joint TCI state for macro TRP may be applied to one or more UL/DL channels/RSs associated with the macro TRP.

Another joint TCI state for UL reception point may be applied to one or more UL channels/RSs associated with a UL reception point. The joint TCI for UL reception point may be used for a UL beam indication and a pathloss (PL) indication related to the UL reception point.

### <<Case where Separate TCI States are Configured for Macro TRP and UL Reception Point>>

One set of a DL TCI state and a UL TCI state for the macro TRP may be applied to a UL/DL channel/RS associated with the macro TRP.

Another set of a DL TCI state and a UL TCI state for the UL reception point may be applied to one or more UL channels/RSs associated with the UL reception point. The UL TCI for the UL reception point may be used for a UL beam indication and a PL indication related to the UL reception point.

For the configuration of the QCL source/spatial relation of the UL TCI state for the UL reception point, at least one of the following options may be applied.
Option 1: No RS restriction. Specifically, any RS of an SRS/SSB/CSI-RS can be configured as a QCL source RS of the UL TCI state associated with the UL reception point.
Option 2: With RS restriction. Specifically, only a specific RS (for example, SRS/SSB/CSI-RS) may be configured as a QCL source RS of the UL TCI state associated with the UL reception point.

For the configuration of the DL TCI state of the UL reception point, at least one of the following options may be applied. A "UL TCI state associated with a DL TCI state" may mean a UL TCI state paired with (in the same set as) the DL TCI state.
Option 1: No restriction. Specifically, when the UL TCI state associated with the DL TCI state is associated with the UL reception point, the DL TCI state can be configured for the UL reception point. However, the DL TCI state is not applied to any DL channel/RS finally.
Option 2: When the UL TCI state associated with the DL TCI state is associated with the UL reception point, the DL TCI state is not present in the configuration information (not configured for the UL reception point). In this case, unnecessary configurations can be reduced, and hence RRC overhead can be reduced.
Option 3: When the UL TCI state associated with the DL TCI state is associated with the UL reception point, the UE does not expect the DL TCI state to be configured for the UL reception point.

An SRS may be applied to the UE as a QCL resource RS of a joint TCI state, and the SRS may be applied only to the UL reception point. In other words, the joint TCI with the SRS as the QCL resource may mean a scenario (scenario 1) of the UL reception point.

Note that, in FR2, joint TCI with an SSB/CSI-RS as a QCL source RS may possibly not function at a UL reception point. In the present embodiment, only separate TCI may be configured for a UL reception point. In the UL TCI for a UL reception point, only an SSB may be configured for a QCL source RS.

### {Option B}

The UE may receive configuration information including only separate TCI states (maximum of two sets of a DL TCI state and a UL TCI state) by higher layer signaling/physical layer signaling. For example, a first set of separate TCI states may be for a macro TRP and a second set of separate TCI states may be for a UL reception point.

In this case, an example similar to <<Case where Separate TCI States are Configured for Macro TRP and UL Reception Point>> in Option A may be applied. In option B, although no joint TCI state is configured for the macro TRP, a base station (gNB) can configure the same SSB/CSI-RS as the QCL source for both DL TCI and UL TCI. In this case, operation of the UE is similar to the operation of a case where joint TCI is configured.

### {Option C}

The UE may receive configuration information in which a joint TCI state and a UL TCI state are combined. The configuration information may include one joint TCI state or one set of separate TCI states for a macro TRP and another UL TCI state for a UL reception point.

### <<Case where Joint TCI State is Configured for Macro TRP>>

One joint TCI state for macro TRP may be applied to one or more UL/DL channels/RSs associated with a macro TRP.

Another UL TCI state for UL reception point may be applied to one or more UL channels/RSs associated with a UL reception point.

### <<Case where Separate TCI States are Configured for Macro TRP>>

One set of a DL TCI state and a UL TCI state for the macro TRP may be applied to a UL/DL channel/RS associated with a macro TRP.

Another UL TCI state for the UL reception point is applied to one or more UL channels/RSs associated with the UL reception point. The UL TCI for UL reception point may be used for a UL beam indication and a PL indication related to the UL reception point.

For the configuration of the QCL source/spatial relation of the UL TCI state for the UL reception point, at least one of the following options may be applied.
Option 1: No RS restriction. Specifically, any RS of an SRS/SSB/CSI-RS can be configured as a QCL source RS of the UL TCI state associated with the UL reception point.
Option 2: With RS restriction. Specifically, only a specific RS (for example, SRS/SSB/CSI-RS) may be configured as a QCL source RS of the UL TCI state associated with the UL reception point.

### {Configuration Example of Unified TCI State}

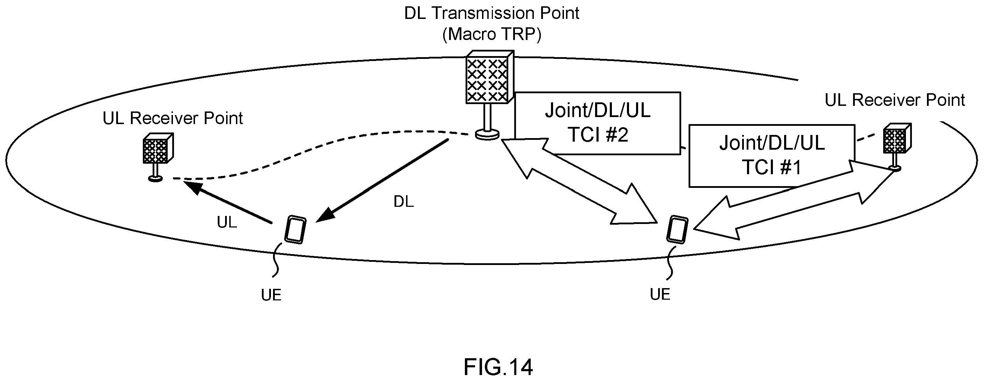

FIG. 14 is a diagram to show a configuration example of a unified TCI state for multi-TRP using scenario 1 in the first embodiment. A UE performs transmission and reception with a UL reception point by using joint/DL/UL TCI state #1. The UE performs transmission and reception with a DL transmission point by using joint/DL/UL TCI state #2. In a case of scenario 1, the UE need not use joint/DL TCI state #1 because the UL reception point does not usually transmit DL.

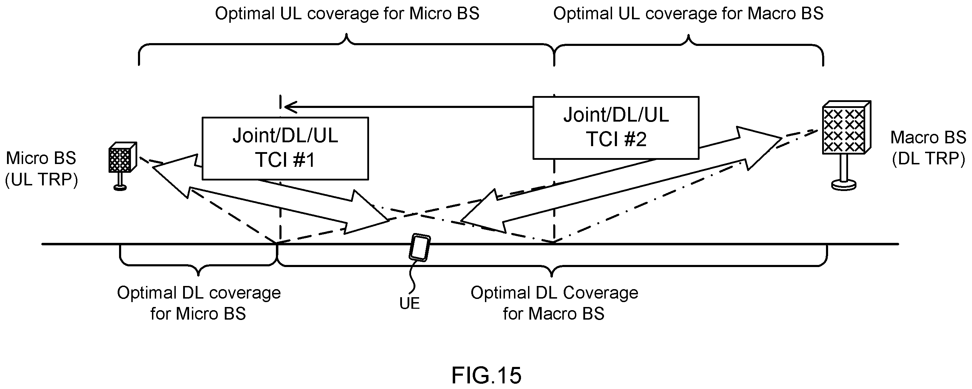

FIG. 15 is a diagram to show a configuration example of a TCI state for multi-TRP using scenario 2 in the first embodiment. A UE performs transmission and reception with a micro BS by using joint/DL/UL TCI state #1. The UE performs transmission and reception with a macro BS by using joint/DL/UL TCI state #2. In a case of scenario 2, there is a possibility that the UE uses joint/DL TCI state #1 because the micro BS transmits DL.

### {Order of Indicated TCI States}

As the order of indicated TCI states, any of the following options (or variation) may be applied.
Option 1: No restriction. For example, the first or second indicated TCI state may be associated with either a macro TRP or a UL reception point.
Option 2: With restriction. For example, the first indicated TCI state may be associated with a macro TRP. Only the second indicated TCI state is associated with a UL reception point. When the second indicated TCI state is not associated with a UL reception point (in other words, when the zeroth embodiment is not applied), normal multi-TRP operation of Rel. 18 may be applied. Variation: In option 2, "first" and "second" may be interchanged.

### {Supplements}

A TCI state for a macro TRP and a TCI state corresponding to a UL reception point may be included in the same TCI pool. When a plurality of UL reception points are present, the TCI states corresponding to the respective UL reception points may be included in the same TCI pool.

According to the first embodiment, reception of a DL signal from a macro TRP and transmission of a UL signal to a UL reception point can be appropriately controlled based on the configuration of a joint TCI/separate TCI state.

### <Second Embodiment>

A UE may receive configuration information including one set of separate DL/UL TCI states according to the unified TCI framework of Rel. 17 for single TRP. One set of separate DL/UL TCI states (same set including DL TCI and UL TCI) may be associated with different TRPs (UL reception point and macro TRP).

The UE may receive a configuration of a particular set of a separate DL TCI state and a separate UL TCI state, use one DL TCI state of the separate TCI states to receive a DL signal from the macro TRP, and use another UL TCI state of the separate TCI states to transmit a UL signal to the UL reception point. The UL TCI state is applied to one or more UL channels/RSs configured according to the indicated TCI state. The DL TCI state is applied to one or more DL channels/RSs configured according to the indicated TCI state.

The one set of indicated TCI states (DL TCI state and UL TCI state) may be used for both the UL reception point and the macro TRP. The one DL TCI state is for the macro TRP, and the one UL TCI state is for the UL reception point.

When at least one UL reception point is present, the UE may be configured with only a separate DL/UL TCI state. In other words, the UE need not expect joint TCI to be configured for the UL reception point.

In other words, the example of the zeroth embodiment may be applied only to the UL TCI state and need not be applied to the joint TCI state. The UL TCI for the UL reception point may be used for a UL beam indication and a PL indication related to the UL reception point.

For the configuration of the QCL source/spatial relation of the UL TCI state for UL reception point, at least one of the following options may be applied.
Option 1: No RS restriction. Specifically, any RS of an SRS/SSB/CSI-RS can be configured as a QCL source RS of the UL TCI state associated with the UL reception point.
Option 2: With RS restriction. Specifically, only a specific RS (for example, SRS/SSB/CSI-RS) may be configured as a QCL source RS of the UL TCI state associated with the UL reception point.

The DL TCI state of the macro TRP may be configured (as one set) to be paired with the UL TCI state associated with the UL reception point.

### <<Variations>>

An SRS may be configured as a QCL source RS of a joint TCI state, and a UE may apply the SRS only to a UL reception point. For example, when DCI indicates a joint TCI state with an SSB/CSI-RS as a QCL source RS, the UE determines that the TCI state corresponds to a beam of a macro TRP. When DCI indicates a joint TCI state with an SRS as a QCL source RS, the UE determines that the TCI state corresponds to a beam of a UL reception point.

### {Configuration Example of Unified TCI State}

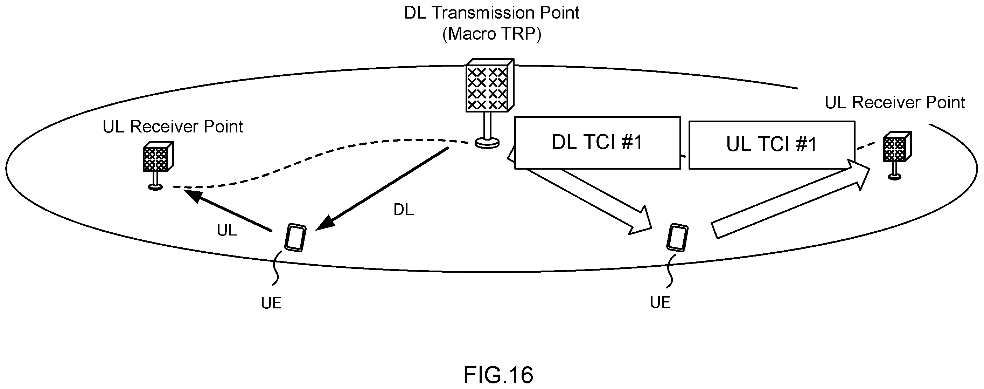

FIG. 16 is a diagram to show a configuration example of a unified TCI state for multi-TRP using scenario 1 in the second embodiment. A UE is configured with UL TCI state #1 for a UL reception point and DL TCI state #1 for a DL transmission point. The UE transmits a UL signal to the UL reception point by using UL TCI state #1. The UE receives a DL signal from the DL transmission point by using DL TCI state #1. In scenario 1, as described in the zeroth embodiment, the UE may receive the configuration of a pathloss value or a pathloss offset.

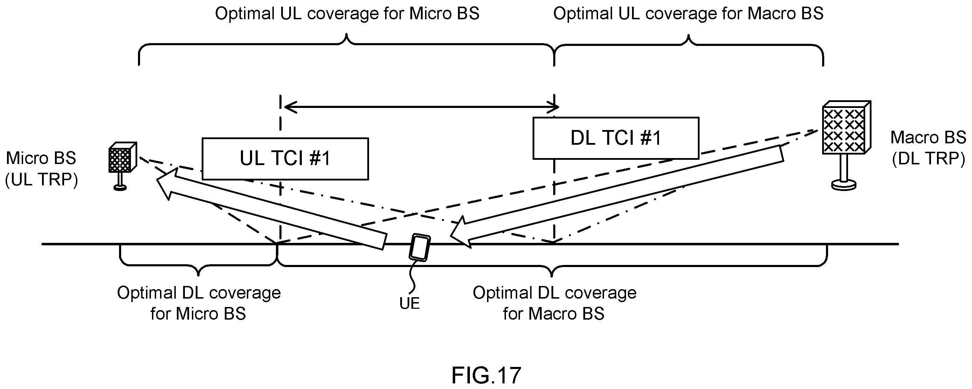

FIG. 17 is a diagram to show a configuration example of a TCI state for multi-TRP using scenario 2 in the second embodiment. A UE is configured with UL TCI state #1 for a micro BS and DL TCI state #1 for a macro BS. The UE transmits a UL signal to the micro BS by using UL TCI state #1. The UE receives a DL signal from the macro BS by using DL TCI state #1. In a case of scenario 2, there is a possibility that the micro BS transmits DL, but the UE cannot apply UL TCI state #1 to a DL channel/RS. Note that, in scenario 2, an RS can be received from the micro BS to measure PL, and hence the configuration of the zeroth embodiment need not be applied.

According to the second embodiment, reception of a DL signal from a macro TRP and transmission of a UL signal to a UL reception point can be controlled appropriately based on configuration of separate TCI states by the unified TCI framework of Rel. 17 for single TRP.

### <Variations>

A TCI state in the present disclosure may be associated only with a serving cell (the PCI of a serving cell).

Alternatively, a TCI state in the present disclosure may be associated with a serving cell (PCI of a serving cell) or a non-serving cell (additional cell, candidate cell, cell having a PCI different from the PCI of a serving cell). For example, a macro TRP (TCI state of a macro TRP) may be associated with the PCI of the serving cell, and a UL reception point (TCI state of a UL reception point) may be associated with the PCI of a non-serving cell (multi-TRP inter-cell mobility).

### <Inter-cell Operation>

Scenario 1 (UL dense deployment) and scenario 2 (HetNet) may be applied to an intra-cell case or may be supported for an inter-cell (multiple cells) case. This enables more use cases to be used. For example, in scenario 2, a UE receives a DL signal from a macro TRP but may possibly move out of optimal UL coverage of the macro TRP, especially at the cell edge, and hence may transmit a UL signal to a UL reception point or a micro BS (UL TRP) of HetNet.

L1/L2 inter-cell mobility and multi-TRP inter-cell mobility of Rel. 17 will be described. In Rel. 17, "additional PCI" associated with a TCI state is configured as an RRC parameter.

It is defined that a UE may receive only a cell-common signal from a serving cell. It is defined that, as a UE procedure for receiving control information, the UE does not need to monitor PDCCH candidates of a Type0/0A/0B/1/1A/2/2A-PDCCH CSS set when the active TCI state of a corresponding CORESET is not associated with physCellId of ServingCellConfigCommon.

L1/L2 inter-cell mobility of Rel. 17 assumes a unified TCI framework for single TRP of Rel. 17. The multi-TRP L1/L2 inter-cell mobility of Rel. 17 assumes a multi-TRP TCI framework of Rel. 15/16. This is enhanced in Rel. 18, and the unified TCI framework for multi-TRP of Rel. 17/18 can be used in multi-TRP inter-cell mobility.

However, it is not clear how to apply the unified TCI framework to the multi-TRP inter-cell mobility. Thus, the inventors of the present inventions came up with the idea of a method of appropriately applying a unified TCI framework to multi-TRP inter-cell mobility.

### <Third Embodiment>

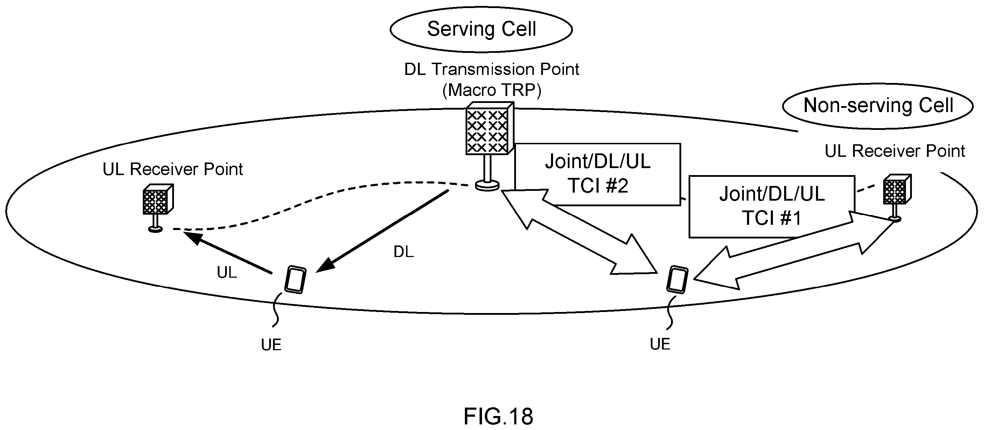

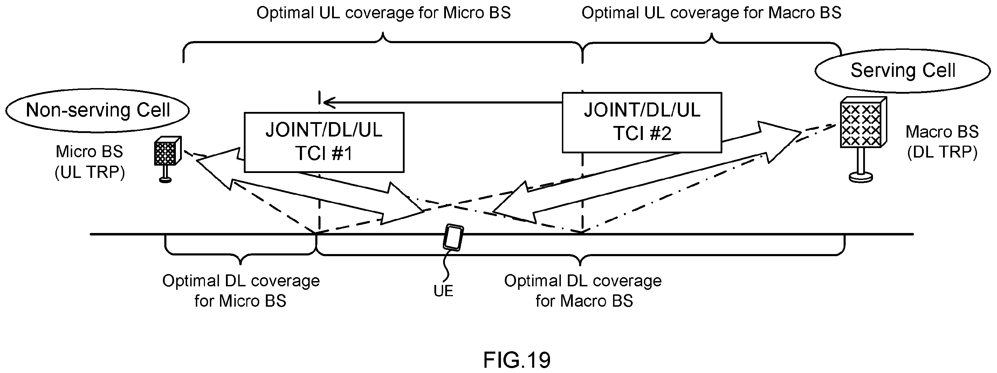

A third embodiment may be combined with the first/second embodiment. For example, a UE may receive configuration information including at least one of a joint TCI state and separate TCI state, and control, based on the configuration information, reception of a DL signal from a macro TRP associated with a Physical Cell Identifier (PCI) of a serving cell and transmission of a UL signal to a UL reception point associated with the PCI of a non-serving cell (FIG. 18 and FIG. 19). The L1/L2 inter-cell mobility (scenario A or B) may be applied.

### {Option 3-1}

A macro TRP (TCI state associated with a macro TRP) may be associated with a serving cell PCI, and a UL reception point (TCI state associated with a UL reception point) may be associated with a non-serving cell PCI.

When the UL reception point is associated with the PCI of the serving cell, there is a possibility that the UE cannot receive paging/short message/system information from the non-serving cell. Thus, the UL reception point is preferably not associated with the serving cell PCI.

### {Option 3-2}

When the zeroth embodiment is applied to scenario 1 (UL dense deployment), the following configurations may be applied to an intra-cell scenario and an inter-cell scenario.

### <<Case of Intra-cell Scenario>>

- The TCI state associated with the macro TRP may be associated with the PCI of the serving cell.
- The TCI state associated with the UL reception point may be associated with the PCI of the serving cell.

### <<Case of Inter-cell Scenario>>

- The TCI state associated with the macro TRP may be associated with the PCI of the serving cell.
- The TCI state associated with the UL reception point may be associated with the PCI of the non-serving cell.

### {Option 3-3}

When scenario 2 (HetNet) is applied, similar contents to those of option 3-2 above may be applied. In scenario 2, the UE can receive a DL signal from the micro BS (UL reception point), and hence the following examples may further be applicable.

### <<Case of Inter-cell Scenario>>

- The TCI state associated with the macro TRP (macro BS) may be associated with the non-serving cell PCI.
- The TCI state associated with the UL reception point (micro BS) may be associated with the serving cell PCI. In this case, the UE may receive paging/short message/system information from the micro BS.

In other words, when it is possible to receive a DL signal from the micro BS (UL reception point), the UE may control reception of a DL signal from the macro TRP associated with the PCI of the non-serving cell and transmission of a UL signal to the UL reception point associated with the PCI of the serving cell, based on configuration information of the TCI state.

### {Variations}

In scenario 1, when a non-serving cell is switched to a serving cell by L1/L2, the TCI state associated with a UL reception point may be deactivated. When the serving cell is switched to a non-serving cell by L1/L2, the TCI state (for example, joint/DL TCI state) associated with a macro TRP may be deactivated.

According to the third embodiment, it is possible to appropriately configure a TCI state in an intra-cell scenario or an inter-cell scenario.

### <Plurality of UL Reception Points>

When the zeroth to third embodiments are applied, a Rel-18 unified TCI framework can be used for multi-TRP. However, since scenarios 1 and 2 are mainly used for a single-TRP scenario, two TCI states cannot be used simultaneously. Hence, even when two indicated TCIs are indicated to the UE, one of the TCIs is used for reception of a channel/RS.

When one TCI is used, whether the TCI is for a UL reception point or a macro TRP can be distinguished by using the method of the zeroth embodiment. In the zeroth embodiment, it is assumed that there are only one UL reception point and one macro TRP. However, in practice, there is a possibility that a plurality of UL reception points to which a UE can perform transmission and one/a plurality of macro TRPs are present.

Hence, it is necessary to study how a UE distinguishes a plurality of UL reception points (TCI states of reception points) or a plurality of macro TRPs (TCI states of macro TRPs).

### <Fourth Embodiment>

A UE may distinguish between a TCI state associated with a UL reception point and a TCI state associated with a macro TRP by using the method in the zeroth embodiment. Any of the following options may further be applied. The UE may receive, for example, the TRP ID corresponding to the UL reception point/macro TRP by higher layer signaling/physical layer signaling.

### {Option 4-1}

A plurality of UL reception points need not be distinguished by TRP IDs. In other words, respective different TRP IDs need not be configured for the plurality of UL reception points.

In a configuration of a "TCI state associated with a UL reception point," different TCI state IDs may be associated with different TCI states of one UL reception point or may be associated with different TCI states of different UL reception points. Note that, in Rel. 15, dynamic point selection for a single TRP is performed by a base station (gNB) by using different TCI states associated with different TRPs.

When the TCI state ID is different for each UL reception point, the UE may distinguish the UL reception points, based on the TCI state IDs.

### {Option 4-2}

The UE may distinguish a plurality of UL reception points by corresponding TRP IDs. In other words, different TRP IDs may be configured for a plurality of respective UL reception points.

In a configuration of a "TCI state associated with a UL reception point," a field indicating a TRP ID (index) may be added.

In a configuration of a "macro TRP associated with a UL reception point," a field indicating a TRP ID (index) may be added. This field may be supported only when a plurality of macro TRPs (for example, in a BWP/in a cell) are supported.

A number (for example, 0, 1, 2, ..., 7) may be configured as the TRP ID. Alternatively, the TRP ID (i.e., the location of the TRP) may be indicated by using a new QCL type/QCL source RS configuration. For example, when RS #1 and RS #2 are in a relationship of QCI type X, this means that the TRP that transmits RS #1 and the TRP that transmits RS #2 are at the same location. Otherwise, there is a possibility that the TRP that transmits RS #1 and the TRP that transmits RS #2 are not at the same location. The new QCL type (QCI type X) corresponding to the same location may mean a TRP ID (i.e., whether locations of TRPs are the same).

QCL type X may be an existing QCL type (QCL types A to D) or may be a QCL type different from QCL types A to D.

According to the fourth embodiment, a UE can appropriately distinguish a plurality of UL reception points.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether or not to support" may be interchangeably interpreted.

The specific UE capability may indicate at least one of the following:
- supporting of specific processing/operation/control/information for at least one of the embodiments above;
- supporting of a single-DCI based multi-TRP scenario;
- supporting of scenario 1 (UL dense deployment);
- supporting of scenario 2 (HetNet);
- supporting of UL transmission (SRS/PUSCH/PUCCH/PRACH) to a UL reception point; and
- the number of supported UL reception points/DL transmission points.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes)

Regarding one embodiment of the present disclosure, the following supplementary notes of the invention will be given.

### {Supplementary Note 1}

A terminal including:
a receiving section that receives configuration information including at least one of a joint Transmission Configuration Indication (TCI) state and a separate TCI state; and
a control section that controls reception of a downlink (DL) signal from a macro transmission/reception point (TRP) and transmission of an uplink (UL) signal to a UL reception point, based on the configuration information.

### {Supplementary Note 2}

The terminal according to supplementary note 1, wherein
the configuration information includes either a maximum of two of the joint TCI state or a maximum of two sets of the separate TCI state, the two joint TCI states or the maximum of two sets of separate TCI states being associated with both the macro TRP and the UL reception point.

### {Supplementary Note 3}

The terminal according to supplementary note 1 or 2, wherein
the configuration information only includes two sets of separate TCI states, a first set of separate TCI states being for the macro TRP while a second set of separate TCI states being for the UL reception point.

### {Supplementary Note 4}

The terminal according to any one of supplementary notes 1 to 3, wherein
the configuration information includes one set of separate TCI states; and
the control section uses a DL TCI state of the separate TCI state to receive a DL signal from a macro TRP and uses a UL TCI state of the separate TCI state to transmit a UL signal to a UL reception point.

### (Supplementary Notes)

Regarding one embodiment of the present disclosure, the following supplementary notes of the invention will be given.

### {Supplementary Note 1}

A terminal including:
a receiving section that receives configuration information including at least one of a joint Transmission Configuration Indication (TCI) state and a separate TCI state; and
a control section that controls reception of a downlink (DL) signal from a macro transmission/reception point (TRP) associated with a Physical Cell Identifier (PCI) of a serving cell and transmission of an uplink (UL) signal to a UL reception point associated with a PCI of a non-serving cell, based on the configuration information.

### {Supplementary Note 2}

The terminal according to supplementary note 1, wherein
when it is possible to receive a DL signal from the UL reception point, the control section controls reception of the DL signal from the macro TRP associated with the PCI of the non-serving cell and transmission of the UL signal to the UL reception point associated with the PCI of the serving cell, based on the configuration information.

### {Supplementary Note 3}

The terminal according to supplementary note 1 or 2, wherein
when a plurality of the UL reception points are present, the control section distinguishes the plurality of UL reception points, based on TRP IDs.

### (Radio Communication System)

Hereinafter, a structure of a radio communication system according to one embodiment of the present disclosure will be described. In this radio communication system, the radio communication methods according to the respective embodiments of the present disclosure described above may each be used alone or may be used in combination for communication.

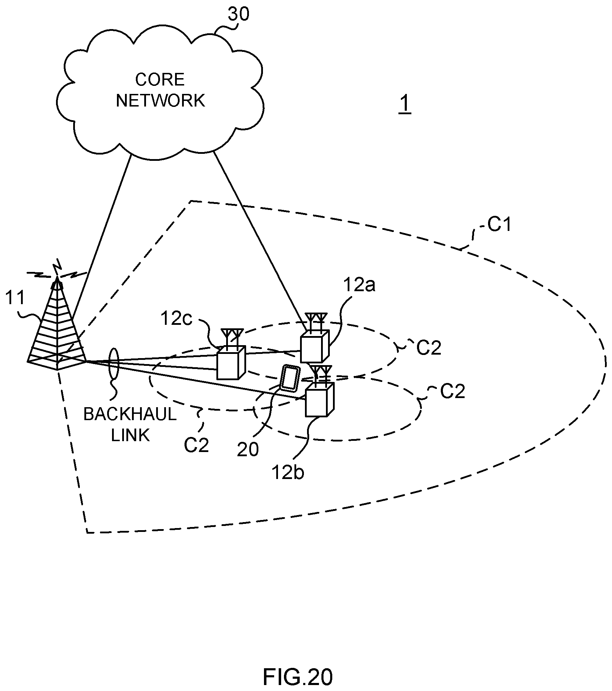

FIG. 20 is a diagram to show an example of a schematic structure of the radio communication system according to one embodiment. A radio communication system 1 (which may be simply referred to as a system 1) may be a system implementing communication using Long Term Evolution (LTE), 5th generation mobile communication system New Radio (5G NR) and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

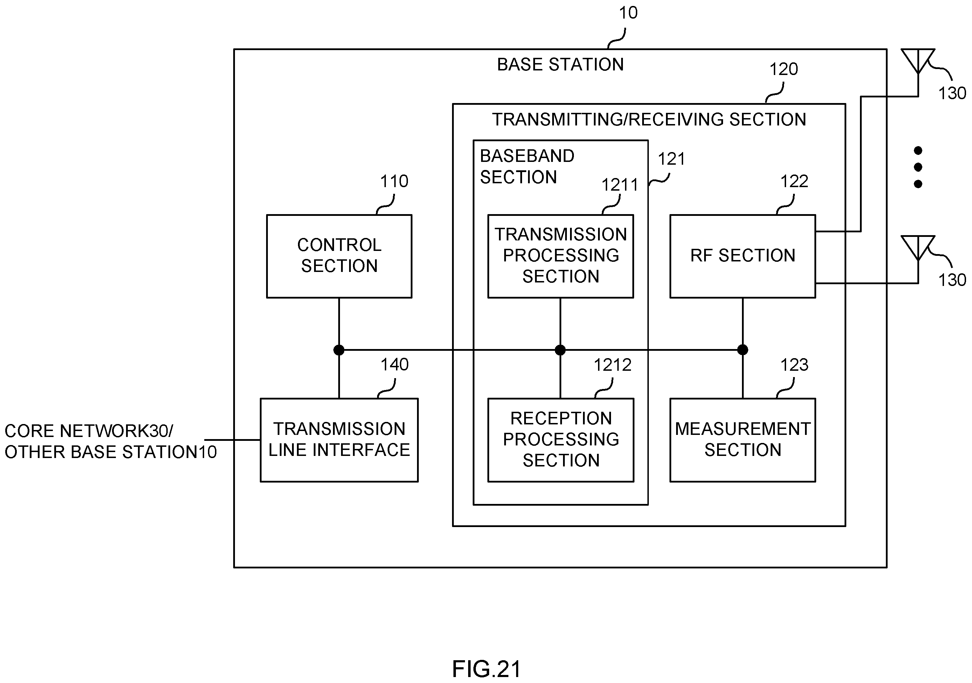

FIG. 21 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit configuration information including at least one of a joint Transmission Configuration Indication (TCI) state and a separate TCI state.

The control section 110 may control transmission of a downlink (DL) signal or reception of an uplink (UL) signal, based on the configuration information. When the base station 10 is a macro TRP, the base station 10 may control transmission of a DL signal, based on the configuration information. When the base station 10 is a UL reception point, the base station 10 may control reception of a UL signal, based on the configuration information.

When the base station 10 is a macro TRP, the base station 10 may be associated with a Physical Cell Identifier (PCI) of a serving cell. When the base station 10 is a UL reception point, the UE may be associated with the PCI of a non-serving cell.

### (User Terminal)

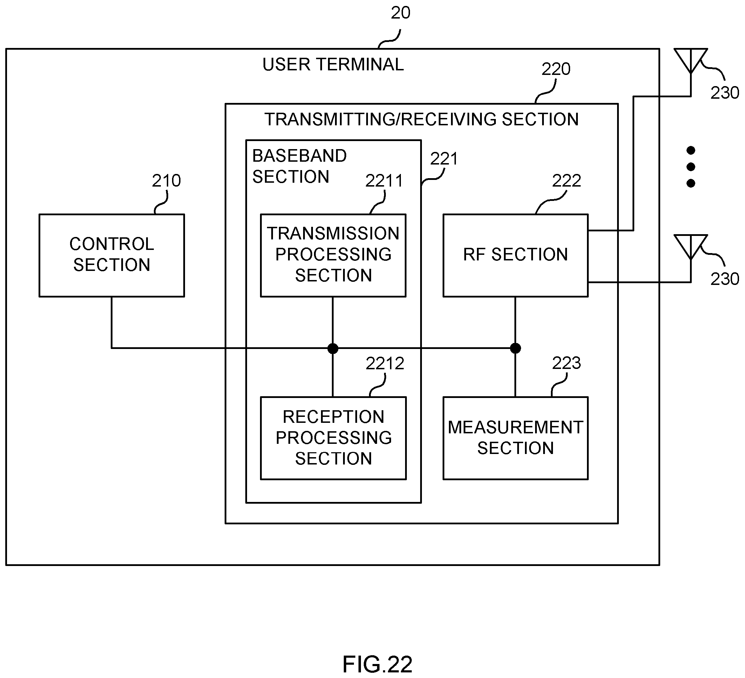

FIG. 22 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive configuration information including at least one of a joint Transmission Configuration Indication (TCI) state and a separate TCI state.

The control section 210 may control reception of a downlink (DL) signal from a macro transmission/reception point (TRP) and transmission of an uplink (UL) signal to a UL reception point, based on the configuration information.

The configuration information may include either a maximum of two of the joint TCI state or a maximum of two sets of the separate TCI state, the two joint TCI states or the maximum of two sets of separate TCI states being associated with both the macro TRP and the UL reception point.

The configuration information may only include two sets of separate TCI states, a first set of separate TCI states being for the macro TRP while a second set of separate TCI states being for the UL reception point.

The configuration information may include one set of separate TCI states, and the control section 210 may use a DL TCI state of the separate TCI state to receive a DL signal from a macro TRP and uses a UL TCI state of the separate TCI state to transmit a UL signal to a UL reception point.

The transmitting/receiving section 220 may receive configuration information including at least one of a joint Transmission Configuration Indication (TCI) state and a separate TCI state.

The control section 210 may control reception of a downlink (DL) signal from a macro transmission/reception point (TRP) associated with a Physical Cell Identifier (PCI) of a serving cell and transmission of an uplink (UL) signal to a UL reception point associated with a PCI of a non-serving cell, based on the configuration information.

When it is possible to receive a DL signal from the UL reception point, the control section 210 may control reception of the DL signal from the macro TRP associated with the PCI of the non-serving cell and transmission of the UL signal to the UL reception point associated with the PCI of the serving cell, based on the configuration information.

When a plurality of UL reception points are present, the control section 210 may distinguish the plurality of UL reception points, based on TRP IDs.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

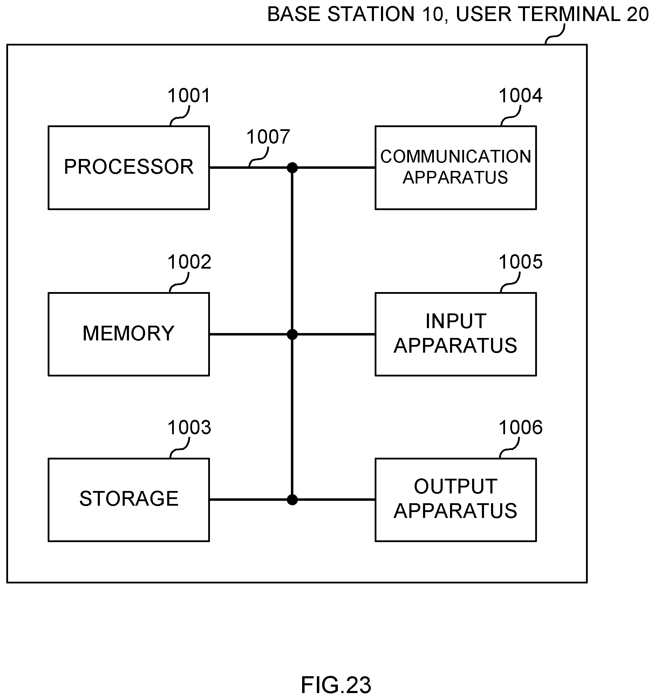

For example, a base station, a user terminal, and so on according to one embodiment of the present disclosure may function as a computer that executes the processes of the radio communication method of the present disclosure. FIG. 23 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

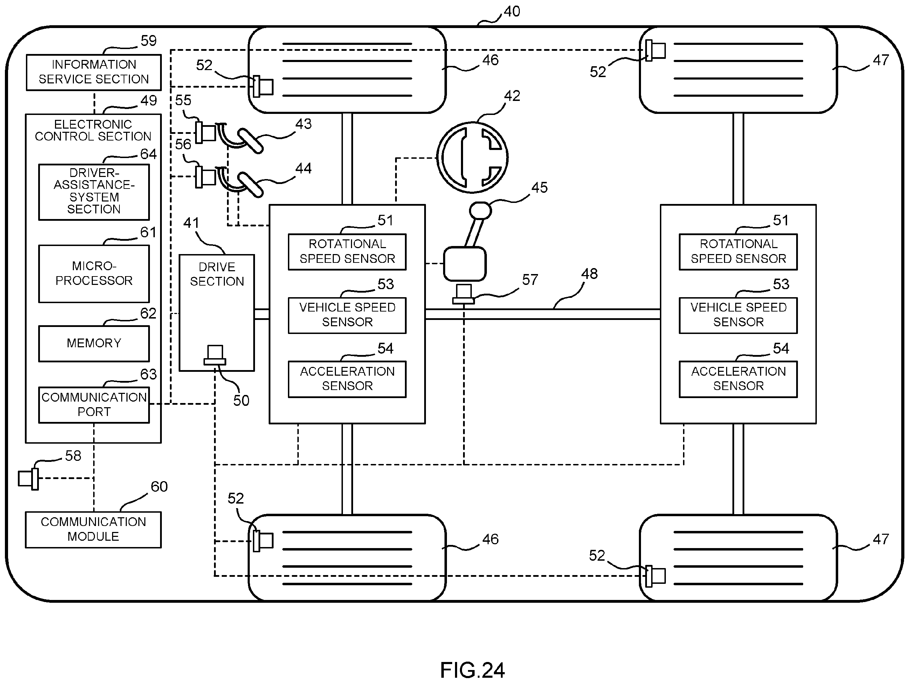

FIG. 24 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives configuration information including at least one of a joint Transmission Configuration Indication (TCI) state and a separate TCI state; and
a control section that controls reception of a downlink (DL) signal from a macro transmission/reception point (TRP) and transmission of an uplink (UL) signal to a UL reception point, based on the configuration information.

2. The terminal according to claim 1, wherein
the configuration information includes either a maximum of two of the joint TCI state or a maximum of two sets of the separate TCI state, the two joint TCI states or the maximum of two sets of separate TCI states being associated with both the macro TRP and the UL reception point.

3. The terminal according to claim 1, wherein
the configuration information only includes two sets of separate TCI states, a first set of separate TCI states being for the macro TRP while a second set of separate TCI states being for the UL reception point.

4. The terminal according to claim 1, wherein
the configuration information includes one set of separate TCI states; and
the control section uses a DL TCI state of the separate TCI state to receive a DL signal from a macro TRP and uses a UL TCI state of the separate TCI state to transmit a UL signal to a UL reception point.

5. A radio communication method for a terminal, the radio communication method comprising:
receiving configuration information including at least one of a joint Transmission Configuration Indication (TCI) state and a separate TCI state; and
controlling reception of a downlink (DL) signal from a macro transmission/reception point (TRP) and transmission of an uplink (UL) signal to a UL reception point, based on the configuration information.

6. A base station comprising:
a transmitting section that transmits configuration information including at least one of a joint Transmission Configuration Indication (TCI) state and a separate TCI state; and
a control section that controls transmission of a downlink (DL) signal or reception of an uplink (UL) signal, based on the configuration information.
